**Europäisches Patentamt**

**European Patent Office**

**Office européen des brevets**

(19)

(11) Veröffentlichungsnummer : **0 036 581 B1**

(12) **EUROPÄISCHE PATENTSCHRIFT**

(45) Veröffentlichungstag der Patentschrift :
**18.01.84**

(21) Anmeldenummer : **81101854.8**

(22) Anmeldetag : **13.03.81**

(51) Int. Cl.³ : **C 02 F 1/74, C 02 F 3/10, C 02 F 3/20, C 02 F 7/00, B 01 J 10/00**

(54) **Verfahren zur Verhinderung von funktionshemmenden Ablagerungen und Ansätzen bei Anlagen zur Belüftung oder Begasung von Wasser oder sonstigen Flüssigkeiten.**

(30) Priorität : **25.03.80 DE 3011338**

(43) Veröffentlichungstag der Anmeldung :
**30.09.81 Patentblatt 81/39**

(45) Bekanntmachung des Hinweises auf die Patenterteilung : **18.01.84 Patentblatt 84/03**

(84) Benannte Vertragsstaaten :
**AT BE CH DE FR GB IT LI LU NL SE**

(56) Entgegenhaltungen :
**DE-A- 1 584 899**
**DE-A- 2 040 781**
**DE-A- 2 243 412**

(73) Patentinhaber : **Heinisch, Lutz-Matthias**
**Eckertstrasse 10**
**D-5000 Köln 41 (DE)**

(72) Erfinder : **Heinisch, Lutz-Matthias**
**Eckertstrasse 10**
**D-5000 Köln 41 (DE)**

EP 0 036 581 B1

Verfahren zur Verhinderung von funktionshemmenden Ablagerungen und Ansätzen bei Anlagen zur Belüftung oder Begasung von Wasser oder sonstigen Flüssigkeiten

Die Erfindung bezieht sich auf ein Verfahren zur Verhinderung von funktionshemmenden Ablagerungen und Ansätzen bei Anlagen zur Belüftung bzw. Begasung von Flüssigkeiten, bei denen einem Flüssigkeitsstrom über einen porösen oder sonstwie mit Durchbrüchen, z. B. Löchern, versehenen Boden eines Behälters oder Gerinnes Gas, in den meisten Fällen Luft (z. B. zur Belüftung von Wasser), eingeblasen wird.

Bei derartigen Anlagen wird der Luft- bzw. Gasdurchtritt durch den Boden oft durch das Entstehen von Ablagerungen und Ansätzen behindert.

Aufgabe der vorliegenden Erfindung ist es, den Luft- bzw. Gasdurchtritt hemmende Ablagerungen und Ansätze an dem Boden des Behälters bzw. Gerinnes zu verhindern.

Zur Lösung der Aufgabe wird auf den Boden eine Schicht Schüttgut in Form von Sinkkörpern beliebiger Form, aber geeigneter Größe, wie Kies oder Granulat, aufgebracht.

Das Korn des Schüttgutes muß so groß sein, daß es nicht durch Durchbrüche (z. B. Löcher) im Boden fallen kann. Sonst sind in Bezug auf Korngröße und Menge die Grenzen weit. Zum Beispiel hat sich in einer Belüftungsanlage für die Trinkwasseraufbereitung bei einem Gerinneboden mit Löchern von ca 2 mm Durchmesser ein Kies mit einer Körnung um ca 7 mm und einer Schichthöhe von 1 bis 2 cm bewährt.

Eine gleichmäßige Verteilung des Schüttgutes stellt sich beim Betrieb von selbst ein, soweit keine konstruktiv beherrschbaren Unzulänglichkeiten an der Anlage vorliegen.

## Anspruch

Verfahren zur Verhinderung von funktionshemmenden Ablagerungen und Ansätzen bei Anlagen zur Belüftung oder Begasung von Wasser oder sonstigen Flüssigkeiten, bei denen der Flüssigkeitsstrom über einen porösen oder mit Durchbrüchen versehenen Boden eines Gefäßes, durch den Gas oder Luft eingeblasen wird, geführt wird, dadurch gekennzeichnet, daß auf diesen Boden eine Schicht Schüttgut in Form von Sinkkörpern beliebiger Form, aber geeigneter Größe, wie zum Beispiel Kies oder Granulat, aufgebracht wird.

## Claim

Prevention of deposits and incrustations susceptible to block proper operation of equipment for aeration of water or other liquids, in which gas or air is blown into the flow of liquid as the latter passes across a porous bottom, or bottom provided with holes, of a vessel, characterized in that there is applied to that bottom a fill of setteable bodies of any shape, however, suitable size, such as gravel or granulate.

## Revendication

Empêcher l'apparition de dépôts et d'incrustations susceptibles de porter atteinte au bon fonctionnement des installations pour l'aérage ou le gazage de l'eau ou d'autres liquides prévoyant le passage du courant de liquide au niveau du fond, poreux ou présentant des ajours, d'un récipient, au travers duquel est insufflé du gaz ou de l'air ; ce procédé est caractérisé par la mise en place, au niveau de ce fond, d'un remblai de produits non flottants de n'importe quelle forme, mais d'une taille appropriée, tels que du gravier ou des granulés.